Europäisches Patentamt

European Patent Office

Office européen des brevets

(11) Publication number: **0 169 724**
**B1**

# EUROPEAN PATENT SPECIFICATION

(45) Date of publication of patent specification: **27.09.89**

(51) Int. Cl.⁴: **G 21 C 13/02,** G 21 C 13/06

(21) Application number: **85305191.0**

(22) Date of filing: **22.07.85**

(54) Containment hatch integral shield for a nuclear reactor containment.

(30) Priority: **26.07.84 US 634730**

(43) Date of publication of application:
**29.01.86 Bulletin 86/05**

(45) Publication of the grant of the patent:
**27.09.89 Bulletin 89/39**

(84) Designated Contracting States:
**BE FR GB IT SE**

(56) References cited:
**DE-A-2 909 305**
**FR-A-2 347 750**

**POWER, vol. 111, no. 9, September 1967, pages 116-119, New York, US; W.C. HALL: "Nuclear shielding for special situations"**

(73) Proprietor: **WESTINGHOUSE ELECTRIC CORPORATION**
**Westinghouse Building Gateway Center**
**Pittsburgh Pennsylvania 15235 (US)**

(72) Inventor: **Locante, John**
**4807 Lolly Drive**
**Monroeville Pennsylvania (US)**

(74) Representative: **van Berlyn, Ronald Gilbert**
**23, Centre Heights**
**London, NW3 6JG (GB)**

Courier Press, Leamington Spa, England.

## Description

The present invention relates to an improved containment structure for enclosing nuclear reactors so as to protect the environment, and more specifically to an improved shielding means for closing off an opening in a wall of a containment structure, and a method for forming the same.

During the operation of a nuclear reactor, radiation is emitted from which the environment must be shielded. Also, in the event of an accident, adequate shielding of the environment from any radiation from a containment building must be effected. Generally, shielding of the environment from such radiation has been effected by enclosing the reactor within a containment structure, or building, that may be formed from thick concrete walls having a thickness of slightly more than a meter or more, or its mass equivalent, completely surrounding the containment area. The walls must be of a thickness to assure acceptable radiation levels outside the containment structure for both normal operation and following postulated accidents.

While the use of thick concrete walls will protect the environment from radiation from the interior of the containment structure, provision must also be made for openings in the containment wall to enable the placement of material into, or removal of material from, the interior of the containment structure. Such access is provided by an opening through the wall of the structure that is then closed by a closure means such as a metal closure plate.

These openings must be large for equipment transfer and may be on the order of five to six meters in diameter. Since the metallic closure plates do not provide the radiation shielding that is provided by the thick concrete walls, further concrete barriers are often provided, having a thickness equivalent to that of the containment wall, outside the containment structure and about the opening, so as to shield the environment from radiation that may pass through the closure means for the opening in the wall. Such barriers, or massive shield walls require support structure and transport means for their movement, as well as space for storage. Since these barriers enclose the opening on the outside of the containment structure, these massive barriers must be moved in order to provide access to the opening, and the attendant cost, in time and expense, of support and movement of the barriers is high.

As shown in DE—A—29 09 305, such barriers may also be hollow and filled with a granular material which is introduced into the barriers only after they are partially put in place.

It is therefore the principal object of the present invention to provide a radiation shielding means for an opening in a containment wall which does not require massive structure or separate support means and which may be formed integral with the wall.

With this object in view, the present invention resides in a containment enclosing a radioactive area such as a nuclear reactor, including a wall adapted to shield the environment from radiation from the interior of the containment, said wall having an opening and a closure disposed on the inside of said containment for sealing the opening, and retaining means disposed on the outside of said containment wall opposite said closure such that the wall openings therebetween forms a chamber, characterized in that a tubular filling member is disposed on said retaining means adjacent an upper end thereof for charging said chamber with a supply of discrete particles of solid material in an amount sufficient to shield the environment from radiation from the interior of the containment and a tubular discharge member is disposed on said retaining means adjacent a lower end thereof for removal of said particles and that a vent is provided on said retaining means at an upper end thereof for venting of said chamber during charging of said supply of discrete particles.

Moreover the present invention deals with a method for shielding the environment from radiation in accordance with independent claim 4.

The invention will become more readily apparent from the following description of a preferred embodiment thereof shown, by way of example only, in the accompanying drawings, wherein:

Figure 1 is a horizontal cross-sectional view of a prior art shielding means for an opening in a containment structure wall, showing the closure means for the opening and the massive concrete barriers used;

Figure 2 is a vertical sectional view taken along the lines II—II of the prior art structure of Figure 1;

Figure 3 is a vertical cross-sectional view showing the improved containment structure of the present invention with the closure means and a retaining means forming a chamber which is filled with discrete particles of solid material; and

Figure 4 is a front view of the embodiment of the present invention illustrated in Figure 3 showing the retaining means affixed to the exterior wall of the containment structure over the opening through the wall.

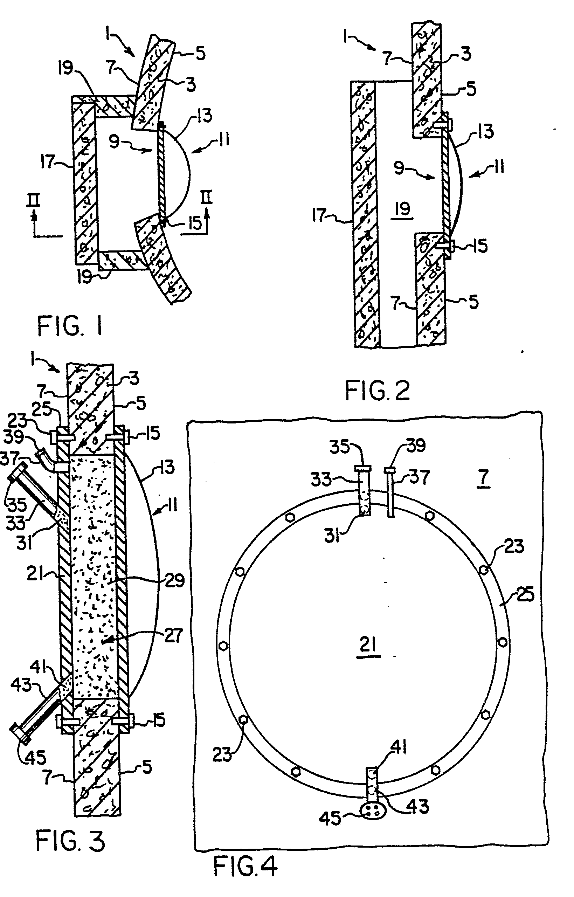

Prior art shields for openings in a containment structure are exemplified in Figures 1 and 2. As illustrated, a containment structure or building 1, has a thick concrete wall 3 which shields the environment from gamma radiation, the interior surface 5 of the wall 3 facing the source of radiation, while the exterior surface 7 of the wall 3 faces the environment in which the containment structure 1 is located. An opening 9 is provided through the wall 3 through which material, supplies or equipment may be transported. The opening 9 is provided with a closure means 11, such as a pressure resistant metal sealing plate 13. Because the interior of the containment structure becomes pressurized following an accident, the sealing plate is designed to withstand such pressures. The sealing plate 13 is affixed to the interior surface 5 of the wall 3 by means of bolts 15 that are removable in instances where access

through the opening 9 is desired, the bolts passing through a flange about the sealing plate 13.

While the closure means 11 seals off the environment from the interior of the containment structure 1, the closure means does not shield the environment from gamma radiation to the extent desired. Therefore, thick concrete or other barriers are used to shield the environment. Such concrete walls may comprise a confronting wall 17, which confronts the opening 9, and side walls 19 which provide a box-like enclosure about the opening 9 in wall 3. Supporting and transporting structures, not shown, are also used with the concrete walls or barriers so as to enable movement of the same sufficient to permit access of equipment into or out of the containment structure 1 through the opening 9, after removal of the closure means 11.

In the present invention, the large, heavy concrete barrier is replaced by a retaining means and a supply of discrete particles of solid material, which in conjunction with an existing closure means provides the necessary radiation shielding.

As illustrated in Figure 3, a sealing plate 13 is provided on the interior surface 5 of the containment wall 3, as is conventional, and is affixed thereto by bolts 15 through a flange of the cover. A retaining means, such as a hatch 21, is spaced from the closure means 11 on the side opposite the interior of the containment structure 1. The hatch 21 may be affixed to the outer surface 7 of the wall 3 by use of bolts 23 through a flange 25 about the hatch. The hatch 21 and closure means 11 form a chamber 27 therebetween, which chamber 27 is preferably provided within the wall 3.

A supply of discrete particles of solid material 29 fills the chamber 27, and is provided in an amount sufficient to shield the environment from radiation from the interior of the containment structure to a value equal to the shielding provided by the solid portions of the wall 3.

Means for charging the chamber 27 with the supply of discrete solid particles is provided adjacent the top of the hatch 21, such as a bore 31 through the hatch which communicates with a feed tube 33. A blind flange 35 is used to close the top of the feed tube 33. In order to achieve complete filling of the chamber 27 through the feed tube 33, a vent 37 is provided adjacent the top of the hatch 21, which vent has a cap 39 to close the same when venting is not being effected. Means for discharging a supply of discrete solid particles from the chamber 27 is provided adjacent the bottom of the hatch 21, such as a bore 41 through the hatch which communicates with a discharge tube 43. A blind flange 45 is used to close the bottom of the discharge tube 43.

The discrete solid particles 29 that are used to fill the chamber 27 between the closure means 11 and the retaining means 21 is a material that will provide the necessary shielding value. The material should have a density of at least 1.7 gr./ cm.$^3$. Examples of such materials are sand-like colemanite, sand, lead shot or steel shot. The solid material should be free-flowing so as to enable charging and discharging to the chamber through the feed tube and discharge tube. The supply of solid material should be that which will provide the desired shielding, and sufficient to result in a peak external radiation of 20 rem./hour following a 10 CFR 100 type accident.

In formation of the improved containment structure wherein an integral shield hatch is formed to seal an opening through the containment wall, a retaining member is affixed to exterior wall of the containment structure to close off the opening from the outside. With the closure means, such as a metallic closure plate, affixed to the interior wall of the containment structure, a closed chamber is formed in the wall between the retaining means and the closure means. The retaining means as thereon a feed tube, vent and discharge tube which communicate with the chamber. With a blind flange sealing the discharge tube, and with the vent open to the atmosphere, a high velocity stream of air entraining discrete particles of solid material is fed through the feed tube into the chamber. The solid material is collected in the chamber, while the air is vented through the tube until the chamber is filled with discrete particles of solid material, in an amount that will provide a shielding to radiation for the environment outside the containment structure at least equal to the shielding provided by the solid portions of the containment wall. The feed tube and vent are then closed with blind flanges or caps to seal the chamber.

When access to the interior of the containment structure is desired, the blind flange on the discharge tube is removed and the discrete particles of solid material discharged, which material may be reused when again filling the chamber, and the retaining means detached from the exterior wall of the containment structure. Upon removal of the closure means on the interior wall of the containment structure, access into, or out of, the containment structure is provided.

The present invention thus provides for an improved containment structure for a nuclear reactor that has a shielding means for an opening in the containment structure wall, integral with the wall, that does not require separately supported and transportable massive concrete barriers.

## Claims

1. A containment (1) enclosing a radioactive area such as a nuclear reactor, including a containment wall (3) adapted to shield the environment from radiation from the interior of the containment, said wall (3) having an opening and a closure (11) disposed on the inside of said containment (1) for sealing the opening, and retaining means (21) disposed on the outer surface (7) of said containment wall (3) opposite said closure (11) such that the wall opening therebetween forms a chamber (27), characterized in that a tubular filling member (33) is disposed on said retaining means (21) adjacent an upper end thereof for charging said chamber (27) with a supply of discrete particles (29) of solid material in an amount sufficient to shield the environment from radiation from the interior of the containment and a tubular discharge member (43) is disposed on said retaining means (21) adjacent a lower end thereof for removal of said particles and that a vent (37) is provided on said retaining means (21) at an upper end thereof for venting of said chamber (27) during charging of said supply of discrete particles (29).

2. A containment according to claim 1, characterized in that said discrete particles (29) have a density of at least 1.7 gr./cm.$^3$.

3. A containment according to claim 2, characterized in that said particles are selected from the group comprising particles (29) of lead, steel, sand and colemanite.

4. A method for shielding the environment from radiation that passes through a closure means (11) which is placed on the interior surface (5) of a containment structure (3), over an opening through said containment structure, while a retainig means (21) is fixed to the exterior surface (7) of said containment structure (3) over said opening to seal the opening and form an enclosed chamber (27) between said closure means (11) and the retaining means (21) as defined in claim 1, wherein a supply of discrete particles (29) of solid material is charged into said enclosed chamber (27) to fill said chamber (27) with said discrete particles (29) of solid material, characterized in that said solid particles (29) are entrained in a stream of air for said charging said chamber (27).

**Patentansprüche**

1. Eine Einfassung (1), die einen radioaktiven Bereich, wie einen Kernreaktor, umgibt, bestehend aus einer Einfassungswand (3) zur Abschirmung der Umgebung von der Strahlung aus dem Innenraum der Einfassung, wobei die Wand (3) eine Öffnung und einen an der Innenseite der Einfassung angeordneten, die Öffnung verschließenden Verschluß (11) aufweist, und an der Außenfläche (7) der Einfassungswand (3), gegenüber dem Verschluß (11) ein Halteteil (21) derart angebracht ist, daß die Wandöffnung dazwischen eine Kammer (27) bildet, dadurch gekennzeichnet, daß angrenzend an das obere Ende des Halteteils (21) ein rohrförmiger Einfüllstutzen (33) angeordnet und zum Befüllen der Kammer (27) mit einem Vorrat von zerkleinerten Partikeln (29) eines festen Materials vorgesehen ist, das in einer ausreichenden Menge eingebracht wird, um die Umgebung gegen die Strahlung aus dem Innenraum der Einfassung abzuschirmen, angrenzend an einem unteren Ende des Halteteils (21) ein rohrförmiger Entleerungsstutzen (43) angeordnet ist, um die Partikel zu entfernen, wobei ferner das Halteteil (21) an seinem oberen Ende eine Entlüftung (37) aufweist, um die Kammer (27) während des Einfüllens der zerkleinerten Partikel (29) zu entlüften.

2. Einfassung nach Anspruch 1, dadurch gekennzeichnet, daß die zerkleinerten Partikel (29) eine Dichte von mindestens 1,7g/cm$^3$ aufweisen.

3. Einfassung nach Anspruch 2, dadurch gekennzeichnet, daß die Partikel (29) aus Blei, Stahl, Sand und/oder Colemanit bestehen.

4. Ein Verfahren zur Abschirmung der Umgebung gegen Strahlung, die durch ein Verschlußteil (11) dringt, das an der Innenfläche (5) einer Konstruktion (3) einer Einfassung über einer Öffnung angeordnet ist, während ein Halteteil (21) an der Außenfläche (7) der Konstruktion (3) über der Öffnung befestigt ist, um die Öffnung zu verschließen und eine umschlossene Kammer (27) zwischen dem Verschlußteil (11) und dem Halteteil (21) zu bilden, gemäß Anspruch 1, wobei ein Vorrat von zerkleinerten Partikeln (29) eines festen Materials in die umschlossene Kammer (27) eingebracht und diese Kammer (27) mit den zerkleinerten Feststoffpartikeln (29) gefüllt wird, dadurch gekennzeichnet, daß zum Füllen der Kammer (27) die Feststoffpartikel (29) von einem Luftstrom mitgenommen werden.

**Revendications**

1. Enceinte (1) renfermant une zone radio-active telle qu'un réacteur nucléaire, comportant une paroi (3) d'enceinte, adaptée pour protéger l'environnement des radiations en provenance de l'intérieur de l'enceinte, ladite paroi (3) ayant une ouverture et une fermeture (11) disposées sur le côté intérieur de ladite enceinte (1) pour fermer hermétiquement l'ouverture, et un moyen de retenue (21) disposé sur la surface extérieure (7) de ladite paroi (3) d'enceinte à l'opposé de ladite fermeture (11), de telle sorte que l'ouverture de la paroi située entre ces éléments forme une chambre (27), caractérisée par le fait qu'une pièce tubulaire (33) de remplissage est disposée sur ledit moyen (21) de retenue, en un endroit adjacent à l'extrémité supérieure de ce moyen, pour charger ladite chambre (27) avec un approvisionnement de particules (29) discrètes de matériau solide, en quantité suffisante pour protéger l'environnement des radiations en provenance de l'intérieur de l'enceinte et qu'une pièce tubulaire (43) de décharge est disposée sur ledit moyen (21) de retenue, en un endroit adjacent à l'extrémité inférieure de ce moyen pour enlever lesdites particules, et qu'un orifice d'aération (37) est prévu sur ledit moyen (21) de retenue à leur extrémité supérieure, pour ventiler ladite chambre (27) pendant le chargement de ladite fourniture de particules discrètes (29).

2. Enceinte selon la revendication 1, caractérisée par le fait que lesdites particules discrètes (29) ont au moins une densité de l,7 g/cm$^3$.

3. Enceinte selon la revendication 2, caractérisée par le fait que les particules sont sélectionnées à partir d'un groupe comprenant des particules (29) de plomb, d'acier, de sable et de colémanite.

4. Procédé pour protéger l'environnement des radiations qui passent à travers le moyen de fermeture (11) qui est placé sur la surface intérieure (5) d'une structure (3) d'enceinte, sur une ouverture traversant ladite structure d'enceinte, tandis que le moyen de retenue (21) est fixé sur la surface extérieure (7) de ladite structure (3) d'enceinte, sur ladite ouverture pour rendre hermétique cette ouverture et constituer une chambre fermée (27) entre ledit moyen de fermeture (11) et le moyen de retenue (21) tels qu'ils sont définis dans la revendication 1, dans lequel une fourniture de particules discrètes (29) de matériau solide est chargée dans ladite chambre fermée (27) pour remplir ladite chambre (27) avec lesdites particules discrètes (29) de matériau solide, caractérisé par le fait que lesdites particules solides (29) sont entraînées dans un flux d'air pour ledit chargement de ladite chambre (27).

EP 0 169 724 B1

FIG. 1

FIG. 2

FIG. 3

FIG.4

1